(19) Europäisches Patentamt / European Patent Office / Office européen des brevets

(11) **EP 3 953 206 B1**

(12) **FASCICULE DE BREVET EUROPEEN**

(45) Date de publication et mention de la délivrance du brevet:
**08.03.2023 Bulletin 2023/10**

(21) Numéro de dépôt: **20725786.6**

(22) Date de dépôt: **10.04.2020**

(51) Classification Internationale des Brevets (IPC):
**B60L 50/10** (2019.01)   **F02C 9/26** (2006.01)
**B64D 27/24** (2006.01)   **B64D 27/02** (2006.01)
**F02C 9/28** (2006.01)   **F02K 5/00** (2006.01)

(52) Classification Coopérative des Brevets (CPC):
**B60L 3/04; B60L 50/10; B64D 27/24; B64U 50/19; F02C 9/28; F02K 5/00;** B60L 2200/10; B60L 2240/441; B64D 2027/026; Y02T 10/7072; Y02T 50/60

(86) Numéro de dépôt international:
**PCT/FR2020/000110**

(87) Numéro de publication internationale:
**WO 2020/208318 (15.10.2020 Gazette 2020/42)**

(54) **INSTALLATION PROPULSIVE HYBRIDE ET PROCÉDÉ DE COMMANDE D'UNE TELLE INSTALLATION**

HYBRIDANTRIEBSVORRICHTUNG UND VERFAHREN ZUR STEUERUNG EINER SOLCHEN VORRICHTUNG

HYBRID PROPULSIVE INSTALLATION AND METHOD FOR CONTROLLING SUCH AN INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2019 FR 1903926**

(43) Date de publication de la demande:
**16.02.2022 Bulletin 2022/07**

(73) Titulaire: **Safran Helicopter Engines**
**64510 Bordes (FR)**

(72) Inventeurs:
• **POUMAREDE, Vincent**
**77550 MOISSY-CRAMAYEL (FR)**
• **MARIN, Jean-Philippe, Jacques**
**77550 MOISSY-CRAMAYEL (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
EP-A1- 3 222 510      EP-A1- 3 333 401
EP-A1- 3 372 506      EP-A2- 0 122 445
US-A- 4 119 861       US-A1- 2016 340 051
US-B1- 10 233 768

**Description**

**DOMAINE TECHNIQUE DE L'INVENTION**

L'invention se rapporte au domaine du contrôle des turbogénérateurs aéronautiques destinés à la production d'électricité embarquée à bords d'aéronefs à voilure fixe ou tournante, et plus particulièrement à des aéronefs hybrides électriques, dans lesquels au moins une partie de la propulsion est assurée de manière électrique, l'énergie électrique pouvant être fournie par une combinaison de moyens de stockage, du type batteries, piles à combustible, ou super-condensateurs, et de turbogénérateurs.

**ARRIÈRE-PLAN TECHNIQUE**

De façon connue, sur ce type d'aéronef, la propulsion et/ou la sustentation est assurée par des moteurs électriques qui actionnent des hélices, qui peuvent être du type carénées, ou non carénées, fixes ou basculantes.

Afin d'offrir une autonomie suffisante, outre des moyens de stockage d'énergie électrique utilisés lors de certaines phases de vol de l'aéronef, la majorité de l'énergie électrique utilisée pendant une mission de l'aéronef est produite par un ou une pluralité de turbogénérateurs. EP3222510 décrit un tel exemple de propulsion hybride.

Un turbogénérateur est une turbomachine alimentée en carburant, par exemple en kérosène, qui entraîne une ou des génératrices électriques.

Ainsi, il n'y a pas de lien mécanique direct entre la turbomachine et les organes de propulsion de l'aéronef. Dans ce cas, il s'agit d'une transmission électrique, par opposition à une transmission mécanique classique qui transmet de manière directe la puissance mécanique du turbomoteur à un rotor d'un hélicoptère ou à une hélice d'un turbopropulseur.

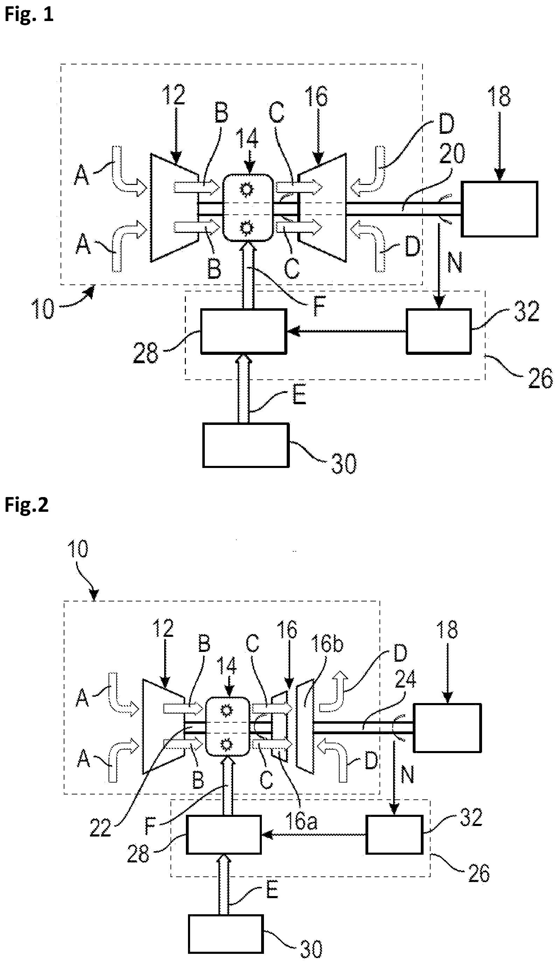

En référence aux figures 1 et 2, un turbogénérateur aéronautique est principalement constitué d'un sous-ensemble comprenant une turbine à gaz qui assure la propulsion de l'aéronef ou qui génère une puissance auxiliaire non propulsive, notamment en raison de son rapport puissance/masse élevé. Pour assurer la propulsion de l'aéronef, la turbine à gaz peut être un turbopropulseur, un turbomoteur d'hélicoptère, ou un turboréacteur. Pour la génération auxiliaire de puissance non propulsive, la turbine à gaz peut être un groupe auxiliaire de puissance (connu sous l'acronyme APU, de l'expression anglaise « Auxiliary Power Unit »).

Une turbine à gaz 10 est constituée d'un ensemble compresseur 12 qui comprime l'air environnant, représenté par les flèches A, d'une chambre de combustion 14 où le carburant est mélangé à l'air comprimé, représenté par les flèches B, puis brûlé, et d'un ensemble turbine 16 qui récupère sous forme mécanique l'énergie obtenue par la détente des gaz de combustion, représentée par les flèches C. Les gaz sont ensuite rejetés par l'ensemble turbine 16, sous forme de gaz d'échappement, représentés par les flèches D.

Cette énergie mécanique est utilisée pour mettre l'ensemble compresseur 12 en rotation, ce qui permet d'entretenir le cycle de fonctionnement.

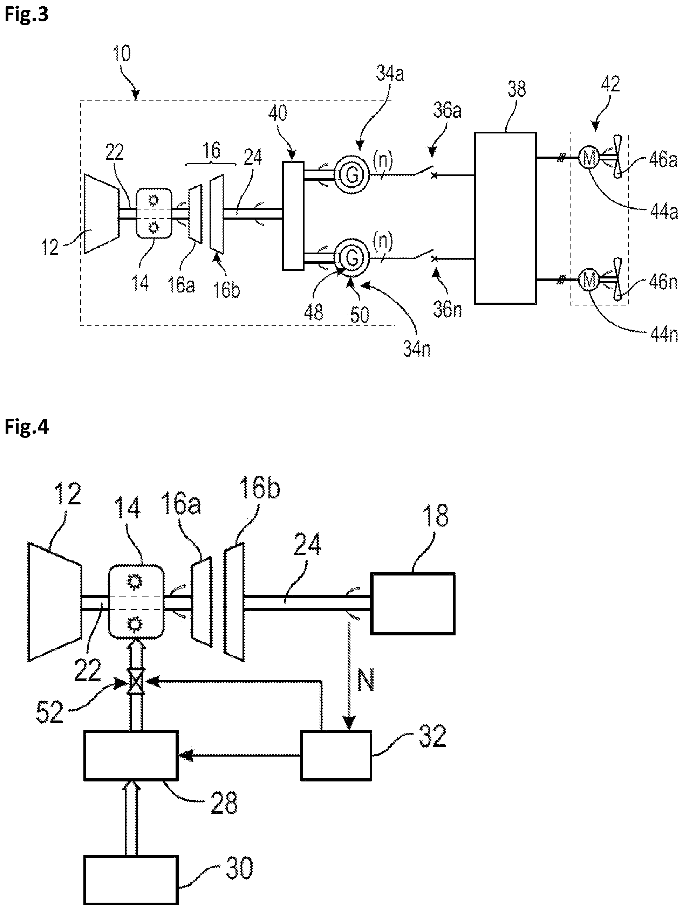

De plus, cette énergie mécanique est utilisée pour entraîner la charge utile 18 de la turbomachine, c'est-à-dire une boîte de transmission principale et des rotors d'un hélicoptère, ou un réducteur, des moteurs électriques (référencés 44a, 44n sur la figure 3) entraînant les hélices d'un turbopropulseur (référencées 46a, 46n sur la figure 3) et la ou les génératrices électriques. La charge utile 18 peut être entraînée par l'intermédiaire d'une transmission mécanique, tel qu'un réducteur ou un multiplicateur, ce qui permet d'adapter les régimes de rotation de l'ensemble turbine 16 et de la charge utile 18.

Sur la figure 1, une turbomachine mono-arbre, dite à turbine liée, est représentée. L'ensemble compresseur 12, l'ensemble turbine 16 et la charge mécanique 18 sont solidaires du même arbre 20, et tournent donc à la même vitesse.

Sur la figure 2, une turbomachine double arbre, dite à turbine libre, est représentée. La turbomachine 10 comprend deux arbres indépendants 22, 24, qui tournent à des vitesses de rotation différentes. Un premier arbre 22 est solidaire de l'ensemble compresseur 12 et d'un premier ensemble de turbine 16a, dit turbine générateur de gaz. Un deuxième arbre 24 permet à un second ensemble turbine 16b, dit turbine libre, d'entraîner la charge utile 18, également appelée charge mécanique.

En raison de la présence de deux arbres, les turbomachines à turbine libre sont mécaniquement plus complexes que celles à turbine liée. Cependant, la possibilité de faire varier la vitesse de leur compresseur indépendamment de la vitesse de la charge mécanique les rend aptes à être pilotées de manière plus efficace, notamment en termes de consommation spécifique, dans l'ensemble du domaine de vol.

Dans la suite de la description, les termes « turbine de travail » désignent les ensembles turbine 16 à turbine liée et 16a, 16b à turbine libre qui entraînent la charge mécanique 18.

Un turbogénérateur aéronautique est également constitué d'un sous-ensemble comprenant une ou une pluralité de machines électriques fonctionnant en génératrices, qui constituent la charge mécanique de la turbomachine.

Ces machines électriques sont chacune constituées d'un rotor (référencé 48 sur la figure 3) porteur d'un champ magnétique, qui est entraîné en rotation par l'ensemble turbine 16 de la turbomachine 10, éventuellement par l'intermédiaire d'une transmission mécanique (référencée 40 sur la figure 3) à une ou plusieurs prises de mouvement de sorties, ainsi que d'un stator (référencé 50 sur la figure 3) formé par des conducteurs électriques polyphasés fixes, notés n phases, bobinés autour du rotor sur une culasse magnétique.

Le champ magnétique tournant résultant de la rotation du rotor crée aux bornes des bobinages statoriques (c'est-à-dire les bobinages du stator), par la variation du flux magnétique au travers de la surface de ces bobines, une tension alternative, appelée force électromotrice, dont la fréquence et l'amplitude sont proportionnelles à la vitesse d'entraînement.

Les phases des génératrices sont ensuite électriquement connectées à un réseau électrique propulsif de l'aéronef, à qui elles fournissent la puissance électrique.

Un turbogénérateur aéronautique est également constitué d'un sous-ensemble comprenant un système de régulation 26 qui est configuré pour contrôler la puissance délivrée par la turbomachine 10, surveiller son fonctionnement, et réaliser l'interface avec les systèmes de pilotage de l'aéronef.

Le système de régulation 26 est principalement constitué d'un système carburant 28 configuré pour pomper du carburant dans un réservoir 30 de l'aéronef, le pompage du carburant étant représenté par la flèche E, et pour l'injecter dans la chambre de combustion 14, l'injection du carburant étant représentée par la flèche F, ainsi que d'un calculateur électronique 32, également appelé EECU (acronyme de l'expression anglaise « Engine Electronic Control Unit »).

Le calculateur 32 a pour principale fonction de contrôler la vitesse de rotation N de la charge mécanique 18 du turbomoteur, c'est-à-dire de la ou des génératrices, et de l'asservir à une consigne correspondant à leur vitesse optimale de fonctionnement. Pour cela, le calculateur 32 mesure la vitesse de rotation N de l'arbre 20, 24 de la turbine de travail 16, 16b, compare cette acquisition à la vitesse de consigne, et élabore en conséquence une consigne de débit carburant. Cette consigne est utilisée pour commander un actionneur électromécanique, appelé doseur, qui est configuré pour doser de façon précise le carburant injecté dans la chambre de combustion 14.

Une diminution de la vitesse mesurée en-dessous de la consigne signifie une augmentation de la puissance demandée par le système électrique propulsif, et donc du couple résistant imposé sur l'arbre 20, 24 par la ou les génératrices. Ceci se traduit par une augmentation de la quantité de carburant injectée. De façon analogue, en cas d'augmentation de la vitesse mesurée au-dessus de sa consigne, il y a une diminution de la quantité de carburant injectée.

Toutefois, une panne ou un défaut dans un de ses composants peut se traduire par un court-circuit électrique, dont les conséquences potentielles sont d'autant plus sérieuses que la puissance propulsive élevée d'un aéronef hybride électrique nécessite la mise en oeuvre de systèmes électriques à haute tension.

Il est également impératif de limiter la propagation des pannes, afin de limiter les redondances à intégrer dans l'architecture de la chaîne propulsive électrique.

Pour cette raison, comme représenté sur la figure 3, la connexion des génératrices électriques 34a, 34n au système électrique propulsif 38 alimentant les propulseurs électriques 42 est généralement réalisée par l'intermédiaire d'un appareillage électromécanique de protection, de type disjoncteur 36a, 36n ou contacteur, à pouvoir de coupure élevé. Sur la figure 3, deux génératrices 34a, 34n sont représentées, mais il pourrait y avoir une seule ou un nombre différent de génératrices.

Le rôle des disjoncteurs 36a, 36n est de protéger les génératrices 34a, 34n des conséquences d'une surintensité consécutive à un court-circuit aval, qui pourrait les endommager. Un court-circuit aval désigne un court-circuit survenant dans la partie de l'installation allant des disjoncteurs (ou plus généralement, des moyens électromécaniques de protection) au système électrique propulsif. Un disjoncteur 36a, 36n ouvre physiquement, et de manière rapide, les circuits électriques des différentes phases des génératrices 34a, 34n, de manière à les isoler du réseau électrique de l'aéronef.

L'ouverture d'un disjoncteur 36a, 36n se traduit par une annulation presque instantanée, plus précisément en quelques millisecondes, de la puissance électrique fournie par la génératrice associée 34a, 34n, et donc du couple résistant imposé sur la turbine de travail 16.

L'augmentation rapide qui s'ensuit de la vitesse N de l'arbre 20, 24 est partiellement contrecarrée par le calculateur 32, qui commande une réduction du débit carburant.

Toutefois, compte tenu du retard de la boucle fermée de régulation chargée de calculer la consigne de débit, dont la performance est nécessairement limitée par des critères de stabilité, notamment en l'absence de correcteur dérivé, et de la dynamique du circuit carburant, la réduction du débit peut parfois être trop lente pour éviter une survitesse de la turbine de travail 16.

La survitesse de la turbine de travail 16 doit être évitée ou au moins limitée en amplitude, car elle impose des contraintes mécaniques, tels que des efforts centrifuges, anormalement élevées sur les éléments en rotation, notamment sur les turbines et les rotors des génératrices, qui peuvent se traduire par un endommagement de ces éléments, voire dans les cas extrêmes, par leur éclatement.

Les turbogénérateurs sont plus vulnérables à ce phénomène de survitesse que les turbomoteurs ou que les turbopropulseurs classiques, car ces derniers profitent de l'inertie élevée de la charge mécanique 18 entraînée.

De plus, les casses de transmission mécaniques, qui constituent les seules avaries susceptibles de provoquer une annulation presque instantanée du couple de charge de la turbine de travail 16, sont extrêmement rares.

Au contraire, l'inertie de la ou des machines électriques entraînées par un turbogénérateur est plus faible, ce qui accentue l'amplitude de la survitesse. Ceci se vérifie notamment lorsque les génératrices 34a, 34n sont des machines électriques entraînées à grande vitesse, du type génératrices à aimants permanents.

En outre, les turbomachines à turbine libre sont également plus sensibles à la survitesse que celles à turbine liée, l'inertie importante de l'ensemble compresseur 12 s'ajoutant sur ces dernières à celles de la turbine de travail 16 et de la charge mécanique 18 entraînée.

Le fait de sur-dimensionner mécaniquement les ensembles tournants du turbogénérateur, c'est-à-dire les turbines et les rotors des génératrices, pour les rendre tolérants aux survitesses, conduit généralement à une pénalité de masse telle que le système n'est plus embarquable.

Il est donc souhaitable d'intégrer au système de régulation une fonction permettant de limiter les survitesses consécutives à une ouverture de disjoncteur et à une perte presque instantanée de la puissance électrique générée.

Il est connu des calculateurs de régulation de turbogénérateurs qui intègrent une fonction de coupure électronique par détection de survitesse.

Un tel système est représenté en figure 4. En particulier, ce système reprend toutes les caractéristiques de la figure 2.

Lorsque la vitesse N de l'arbre 24 de la turbine de travail 16b dépasse un certain seuil de détection, le calculateur 32 commande la fermeture d'un électro-clapet 52 qui coupe rapidement l'alimentation en carburant de la turbomachine qui s'éteint presque instantanément, ce qui limite efficacement l'amplitude de la survitesse.

Toutefois, dans ce système, toutes les génératrices entraînées par le turbogénérateur cessent simultanément d'être entraînées. Ceci peut impacter la fourniture d'énergie électrique à d'autres circuits que celui concerné par le court-circuit à l'origine de l'ouverture disjoncteur.

Ceci peut entraîner la perte d'une proportion significative de la puissance propulsive de l'aéronef hybride électrique, et donc la mise en oeuvre d'une procédure de secours spécifique et contraignante pour l'aéronef.

Ceci peut également être à l'origine de contraintes pénalisantes sur la conception de l'architecture propulsive de l'aéronef, par exemple en prévoyant des systèmes redondants de fourniture de puissance de secours.

De plus, la différence entre le seuil de détection de survitesse codé dans le calculateur 32 et la valeur de survitesse maximale qui ne doit jamais être dépassée par les rotors concernés, c'est-à-dire les rotors de la turbine de travail 16 et de la charge mécanique 18 entraînée, pour des raisons de tenue mécanique, est sensiblement inversement proportionnelle à l'inertie de ces rotors.

Une inertie faible impose de choisir un seuil de déclenchement de la coupure survitesse relativement bas, qui peut interférer avec la survitesse transitoire atteinte par la turbine de travail 16 lors d'un transitoire de fonctionnement normal, telle qu'une diminution rapide de la demande de puissance propulsive demandée par le système de contrôle de vol.

Ceci peut amener à devoir faire un compromis entre les performances de vol de l'aéronef et la masse du turbogénérateur.

Il est également connu d'utiliser un anticipateur, qui est un dispositif transmettant au calculateur 32 une information représentative de la puissance instantanée demandée par le système propulsif au turbogénérateur.

Sur un turbomoteur d'hélicoptère, l'anticipateur consiste en une relecture de la position du pas collectif du rotor principal, ce qui, combiné à la mesure de vitesse de ce rotor et à celle de la densité de l'air, permet de reconstituer, avec une dynamique élevée, une estimation précise de la puissance instantanée que la turbine de travail 16 doit fournir au système propulsif.

Sur un turbopropulseur, un principe analogue s'applique, mais à partir de la mesure du pas de l'hélice.

Cette information de puissance est utilisée dans les boucles de régulation du débit carburant codées dans le calculateur 32 pour effectuer un pré-positionnement en boucle ouverte de la consigne de débit carburant, de sorte à en améliorer les performances dynamiques et à limiter les dépassements de consigne.

Sur un aéronef hybride électrique multi-rotors, l'anticipation est plus complexe à réaliser car elle peut dépendre d'un grand nombre de facteurs, tels que les mesures ou les estimations individuelles de la vitesse, du pas et/ou du couple mécanique de chaque moteur, hélice ou rotor. Ce calcul peut être effectué directement par le calculateur 32, ou bien par un calculateur de l'aéronef puis transmis au calculateur 32 sous une forme synthétique.

Cependant, le temps incompressible de traitement de ces informations et le retard lié à la transmission de l'anticipation par une liaison de donnée numérique limitent le gain de performance lié à son utilisation.

De plus, compte tenu de la reconfiguration rapide du système propulsif en cas de défaut, et notamment des différentes sources d'alimentation en énergie électrique, l'anticipateur peut ne pas parvenir à communiquer au calculateur 32 suffisamment rapidement l'information de délestage très rapide de la puissance fournie par le turbogénérateur suite à l'ouverture du disjoncteur d'une génératrice.

L'invention a pour objectif de proposer une solution permettant de remédier à au moins certains de ces inconvénients.

En particulier, la présente invention propose un autre moyen d'anticiper la perte de couple résistant consécutive à l'ouverture d'un disjoncteur, qui est à la fois fiable et rapide.

## RÉSUMÉ DE L'INVENTION

À cet effet, l'invention concerne une installation propulsive hybride pour un aéronef, comprenant :

- un moteur à combustion interne comportant au moins une chambre de combustion ;
- au moins une génératrice électrique accouplée au moteur à combustion interne de sorte qu'en fonctionnement le moteur à combustion interne entraîne la ou chaque génératrice électrique ;
- un système électrique propulsif accouplé à la ou chaque génératrice électrique de sorte qu'en fonctionnement la ou chaque génératrice électrique entraîne le système électrique propulsif ;
- des moyens électromécaniques de protection agencés entre la ou chaque génératrice électrique et le système électrique propulsif, chaque moyen électromécanique de protection pouvant être dans une position dite fermée dans laquelle un courant électrique est transmis de la génératrice électrique au système électrique propulsif ou dans une position dite ouverte dans laquelle la transmission du courant électrique de la génératrice électrique au système électrique propulsif est interrompue;
- un calculateur électronique configuré pour :

    - recevoir au moins une information sur la position des moyens électromécaniques de protection ;
    - recevoir au moins une information sur une vitesse de rotation d'un arbre du moteur à combustion interne ; et
    - contrôler le débit de carburant alimentant la chambre de combustion en fonction desdites informations reçues.

Selon l'invention, le moteur à combustion interne peut être une turbomachine, qui comporte une turbine à gaz ; et les moyens électromécaniques de protection peuvent comprendre des disjoncteurs.

Avantageusement, l'installation selon l'invention permet d'anticiper la baisse de charge consécutive au délestage d'une génératrice électrique, c'est-à-dire consécutive à la suppression momentanée du courant électrique issu de la génératrice électrique, par une diminution rapide du débit de carburant dosé, et donc de diminuer l'amplitude de la survitesse de la turbine à gaz de la turbomachine.

Une diminution de l'amplitude de la survitesse consécutive à une ouverture des disjoncteurs permet de façon avantageuse d'éviter une coupure survitesse, et donc de conserver une turbomachine fonctionnelle, mais aussi de limiter le niveau de contrainte pris en compte dans le dimensionnement mécanique des génératrices et de la turbine. En effet, selon l'invention, l'information sur la position des moyens électromécaniques de protection est une information discrète liée au délestage électrique des génératrices entraînées par la turbomachine qui est prise en compte de manière à anticiper la baisse de charge.

Chaque moyen électromécanique de protection peut comporter au moins un contact auxiliaire de recopie de la position des pôles de coupure principaux dudit moyen électromécanique de protection.

Dans ce cas, le calculateur électronique est configuré pour recevoir au moins une information sur la position du ou desdits contacts auxiliaires.

L'installation selon l'invention peut également comprendre un dispositif configuré pour recevoir au moins une première information sur la position des moyens électromécaniques de protection et pour la transmettre au calculateur électronique. Un tel dispositif, couramment appelé avionique, peut être intégré à l'aéronef, par exemple dans le poste de pilotage et peut comprendre des systèmes de navigation, de pilotage et d'information de vol.

Le dispositif peut également être configuré pour générer, à partir de la première information, une seconde information sur la position des moyens électromécaniques de protection et pour transmettre ladite seconde information au calculateur électronique.

L'installation selon l'invention peut également comprendre un électro-clapet agencé entre un circuit de carburant et la chambre de combustion.

L'électro-clapet peut être dans une position dite ouverte dans laquelle la chambre de combustion est alimentée en carburant ou dans une position dite fermée dans laquelle l'alimentation en carburant de la chambre de combustion est interrompue.

Dans ce cas, le calculateur électronique est également configuré pour commander l'ouverture et la fermeture de l'électro-clapet.

L'invention concerne également un aéronef comprenant au moins une installation propulsive hybride selon l'invention.

L'invention concerne également un procédé de commande de l'installation propulsive hybride selon l'invention, comprenant les étapes consistant à :

- la réception, par le calculateur électronique, d'au moins une information sur la position des moyens électromécaniques de protection ;
- la réception, par le calculateur électronique, d'au moins une information sur une vitesse de rotation d'un arbre du moteur à combustion interne ; et
- le contrôle, par le calculateur électronique, du débit de carburant alimentant la chambre de combustion en fonction desdites informations reçues.

L'étape de contrôle peut consister en une réduction de la consigne de puissance électrique du moteur à combustion interne lorsque qu'une information sur la position des moyens électromécaniques de protection indique une position ouverte d'au moins un des moyens électromécaniques de protection.

La réduction de la consigne de puissance électrique, pour toutes les génératrices électriques, peut être calculée selon la formule :

[Math 1]

$$P = \frac{P_{ant}}{N}$$

avec P la consigne de puissance électrique du moteur à combustion interne, $P_{ant}$ la puissance d'anticipation des génératrices électriques et du système électrique propulsif avant réception de l'information sur la position des moyens électromécaniques de protection indiquant une position ouverte d'au moins un des moyens électromécaniques de protection, et N le nombre de génératrices électriques de l'installation propulsive hybride.

La réduction de la consigne de puissance électrique, pour chaque génératrice électrique, peut être calculée selon la formule :

[Math 2]

$$P = P\_gen_i$$

avec P la consigne de puissance électrique du moteur à combustion interne, $P\_gen_i$ la puissance d'anticipation de la génératrice électrique i et d'au moins une partie du système électrique propulsif entraînée par la génératrice électrique i, i étant compris entre 1 et N, N étant le nombre de génératrices électriques de l'installation propulsive hybride.

## BRÈVE DESCRIPTION DES FIGURES

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

[Fig. 1] la figure 1 représente très schématiquement un turbomoteur à turbine liée selon l'art antérieur,
[Fig. 2] la figure 2 représente très schématiquement un turbomoteur à turbine libre selon l'art antérieur,
[Fig. 3] la figure 3 représente très schématiquement un système propulsif hybride électrique selon l'art antérieur,
[Fig. 4] la figure 4 représente très schématiquement un turbomoteur à turbine libre avec un système de coupure électronique par détection de survitesse selon l'art antérieur,
[Fig. 5] la figure 5 représente très schématiquement une installation propulsive hybride électrique selon un premier mode de réalisation de l'invention,
[Fig. 6] la figure 6 représente très schématiquement une installation propulsive hybride électrique selon un deuxième mode de réalisation de l'invention.

Les éléments ayant les mêmes fonctions dans les différentes mises en oeuvre ont les mêmes références dans les figures.

## DESCRIPTION DÉTAILLÉE DE L'INVENTION

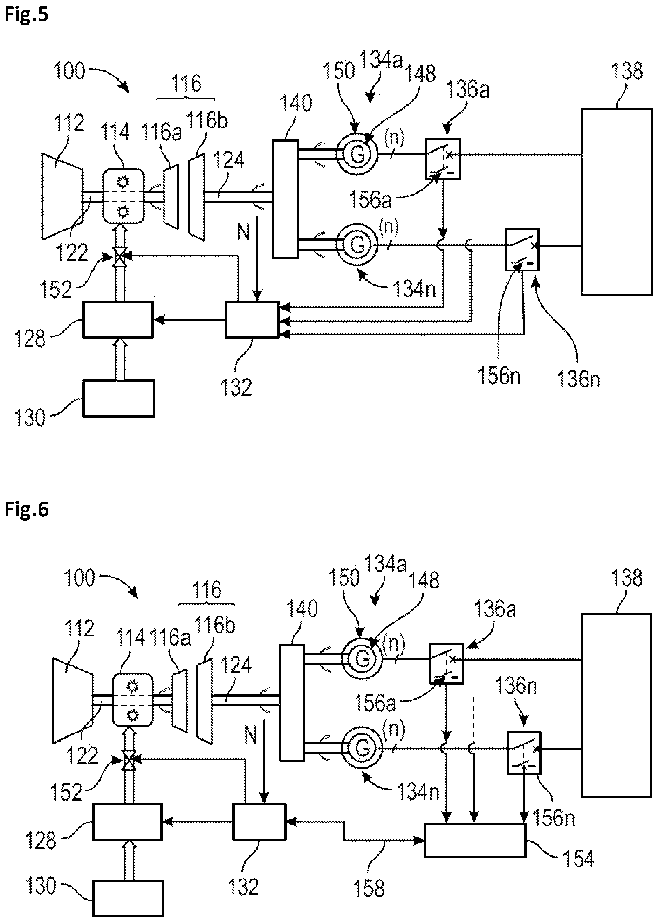

Les figures 5 et 6 représentent des installations propulsives hybrides électriques selon l'invention.
L'installation 100 est constituée d'un moteur à combustion interne, tel qu'une turbomachine, qui comporte un ensemble compresseur 112 qui comprime l'air environnant, une chambre de combustion 114 où le carburant est mélangé à l'air comprimé puis brûlé, et un ensemble turbine 116 qui récupère sous forme mécanique l'énergie obtenue par la détente des gaz de combustion.

L'énergie mécanique peut être utilisée pour mettre l'ensemble compresseur 112 en rotation, de manière à entretenir le cycle de fonctionnement, et à entraîner la charge utile de la turbomachine.

La charge utile peut être entraînée par l'intermédiaire d'une transmission mécanique, tel qu'un réducteur ou un multiplicateur, de manière à adapter les régimes de rotation de l'ensemble turbine 116 et de la charge utile.

Sur les figures 5 et 6, la turbomachine est à turbine libre, et comprend deux arbres indépendants 122, 124, qui tournent à des vitesses de rotation différentes. L'arbre 122 est solidaire de l'ensemble compresseur 112 et d'un premier ensemble de turbine 116a, et l'arbre 124 relie un second ensemble turbine 116b à la charge utile de la turbomachine. Les arbres 122, 124 peuvent être concentriques.

Bien que non représenté, la turbomachine peut être à turbine liée, avec un seul arbre qui relie l'ensemble compresseur, l'ensemble turbine et la charge mécanique.

La turbomachine comporte également au moins une machine électrique fonctionnant en génératrice 134a, 134n, et qui constitue la charge mécanique de la turbomachine. Chaque génératrice 134a, 134n est accouplée au moteur électrique à combustion interne de sorte qu'en fonctionnement, le moteur à combustion interne entraîne les génératrices 134a, 134n.

Une génératrice électrique est constituée d'un rotor 148, qui est entraîné en rotation par l'ensemble turbine 116b, par exemple par l'intermédiaire d'une transmission mécanique 140, ainsi que d'un stator 150.

Sur les figures 5 et 6, deux génératrices 134a, 134n sont représentées, mais il pourrait y avoir une seule ou un nombre différent de génératrices.

Les génératrices électriques sont électriquement connectées au système électrique propulsif 138 de l'aéronef. En fonctionnement, chaque génératrice 134a, 134n alimente en énergie le système électrique propulsif 138.

Le système électrique propulsif 138 peut comporter des moyens de conversion d'un courant continu en un courant alternatif, des moteurs électriques reliés aux moyens de conversion de sorte qu'en fonctionnement les moyens de conversion alimentent les moteurs électriques en courant alternatif, et des hélices accouplées aux moteurs électriques de sorte qu'en fonctionnement les moteurs électriques entraînent les hélices.

L'installation 100 est également constituée d'un système de régulation qui est configuré pour contrôler la puissance délivrée par la turbomachine, surveiller son fonctionnement, et réaliser l'interface avec les systèmes de pilotage de l'aéronef.

Le système de régulation est constitué d'un dispositif carburant 128 configuré pour pomper du carburant dans un réservoir 130 de l'aéronef. Sur les figures 5 et 6, le pompage du carburant est représenté par la flèche E.

Le dispositif carburant 128 est également configuré pour injecter le carburant dans la chambre de combustion 114. Sur les figures 5 et 6, l'injection du carburant est représentée par la flèche F.

Les génératrices 134a, 134n sont connectées au système électrique propulsif 138 par l'intermédiaire de moyens électromécaniques de protection, tels que des disjoncteurs 136a, 136n ou des contacteurs de puissance. Dans le cas d'un disjoncteur, les deux états ouvert et fermé sont des états stables et le pouvoir de coupure est généralement plus grand (par rapport à un contacteur de puissance). Dans la suite, on se réfère plus particulièrement à des disjoncteurs, mais tout ce qui est expliqué s'applique de manière similaire à des contacteurs de puissance.

Les disjoncteurs 136a, 136n sont configurés pour protéger les génératrices 134a, 134n des conséquences d'une surintensité consécutive à un court-circuit aval, c'est-à-dire dans la partie de l'installation allant des disjoncteurs (ou plus généralement, des moyens électro-mécaniques de protection) au système électrique propulsif. Les disjoncteurs 136a, 136n sont configurés pour ouvrir, de manière rapide, les circuits électriques des différentes phases des génératrices 134a, 134n de manière à les isoler du réseau électrique de l'aéronef.

En particulier, chaque disjoncteur 136a, 136n peut être dans une position dite fermée dans laquelle un courant électrique est transmis de la génératrice électrique 134a, 134n au système électrique propulsif 138 ou dans une position dite ouverte dans laquelle la transmission du courant électrique de la génératrice électrique 134a, 134n au système électrique propulsif 138 est interrompue.

En cas de défaut majeur tel qu'un court-circuit dans le système électrique propulsif 138 entraînant l'ouverture d'un ou plusieurs disjoncteurs 136a, 136n, la puissance électrique fournie par les bobinages des génératrices correspondantes 134a, 134n s'annule brutalement, ce qui a pour conséquence que le couple résistif exercé sur la turbine de travail diminue rapidement, et donc on observe une survitesse de la turbine de travail. Une réduction du débit de carburant alimentant la chambre de combustion 114 de la turbomachine permet de palier une survitesse de la turbine de travail.

Le but de la présente invention est d'anticiper la baisse de charge consécutive au délestage d'une génératrice 134a, 134n par une diminution rapide du débit de carburant dosé, et donc de diminuer l'amplitude de la survitesse.

A cet effet, l'installation 100 comprend un calculateur électronique 132 qui est configuré pour recevoir des informations sur les positions des moyens électromécaniques de protection.

Plus précisément, le calculateur 132 prend en compte des informations de nature mécanique directement liées aux positions ouvertes ou fermées des disjoncteurs 136a, 136n.

Le calculateur électronique 132 est également configuré pour recevoir des informations sur la vitesse de rotation N de l'arbre 124 de la turbine de travail 116b. En particulier, le calculateur 132 pet être configuré pour mesurer la vitesse de rotation N de l'arbre 124 de la turbine de travail 116b.

Le calculateur électronique 132 est également configuré pour contrôler le débit de carburant alimentant la chambre de combustion 114 en fonction des informations reçues, c'est-à-dire à partir des informations sur la position des disjoncteurs 136a, 136n et des informations sur la vitesse de rotation N de l'arbre 24 de la turbine de travail 116b.

En particulier, le calculateur 132 est configuré pour comparer ces informations reçues à une consigne de vitesse de rotation de la turbine à gaz, et pour élaborer en conséquence une consigne de débit carburant.

Cette consigne peut être utilisée pour commander un actionneur électromécanique qui est configuré pour doser de manière précise le carburant injecté dans la chambre de combustion 114.

Ainsi, le calculateur 132 est configuré pour commander une augmentation ou une réduction du débit carburant.

En particulier, chaque disjoncteur 136a, 136n peut comporter au moins un contact auxiliaire 156a, 156n de recopie de la position des pôles de coupure principaux du disjoncteur 136a, 136n. Autrement dit, chaque disjoncteur 136a, 136n peut intégrer un contact auxiliaire 156a, 156n de recopie des pôles de coupure principaux, dont la position est, par construction, mécaniquement liée à celle des pôles de coupure principaux.

Le calculateur 132 est alors configuré pour recevoir des informations sur les positions de ces contacts auxiliaires 156a, 156n.

Les informations, de type discret, que ces contacts auxiliaires 156a, 156n procurent sont intrinsèquement très fiables, et sans décalage temporel avec l'ouverture des pôles principaux des disjoncteurs 136a, 136n, autre que la durée d'acquisition par le calculateur 132.

Comme représenté en figure 5, ces contacts auxiliaires 156a, 156n peuvent être directement câblés sur des entrées discrètes du calculateur 132, et leur acquisition est directement intégrée en tant que paramètre dans la loi d'anticipation mise en oeuvre par le calculateur 132 pour contrôler le débit de carburant injecté dans la chambre de combustion 114.

Comme représenté en figure 6, l'installation comprend une avionique 154, qui correspond à l'ensemble des équipements électroniques, électriques et informatiques qui aident au pilotage de l'aéronef. L'avionique 154 est configurée pour recevoir des informations sur les positions des disjoncteurs 136a, 136n et pour les transmettre au calculateur 132. Autrement dit, l'acquisition des positions des disjoncteurs 136a, 136n peut être réalisée dans l'avionique 154, et les données peuvent être transmises par l'avionique 154 au calculateur 132, notamment via un bus numérique 158. L'avionique 154 peut également être configurée pour synthétiser les informations sur les positions des disjoncteurs 136a, 136n et pour transmettre les informations synthétisées au calculateur 132. Autrement dit, les informations peuvent être transmises sous forme synthétiques par l'avionique 154 au calculateur 132.

L'installation 100 peut comprendre un électro-clapet 152 agencé entre le circuit de carburant 130 et la chambre de combustion 114.

L'électro-clapet 152 peut être dans une position dite ouverte dans laquelle la chambre de combustion 114 est alimentée en carburant ou dans une position dite fermée dans laquelle l'alimentation en carburant de la chambre de combustion 114 est interrompue. Le calculateur 132 peut intégrer une fonction de coupure électronique par détection de survitesse. En particulier, le calculateur 132 peut être configuré pour commander la fermeture de l'électro-clapet 152 lorsque la vitesse de rotation N de l'arbre 124 dépasse un certain seuil de détection. L'électro-clapet 152 est ainsi configuré pour couper l'alimentation en carburant de la turbomachine.

L'invention concerne également un procédé de commande de l'installation 100 décrite précédemment.

Le procédé comprend une étape de réception, par le calculateur 132, d'informations sur les positions des disjoncteurs 136a, 136n.

Le procédé comprend également une étape de réception, par le calculateur 132, d'informations sur la vitesse de rotation N de l'arbre 124 de la turbine de travail. Autrement dit, les positions des contacts auxiliaires 156a, 156n de recopie de position correspondants aux disjoncteurs 136a, 136n des différentes génératrices 134a, 134n entraînées par la turbomachine sont acquises par le calculateur 132.

De plus, le procédé comprend une étape de contrôle, par le calculateur 132, du débit de carburant alimentant la chambre de combustion 114 en fonction des informations reçues.

L'étape de contrôle consiste en une réduction de la consigne de puissance électrique de la turbomachine lorsque qu'une information sur la position des disjoncteurs 136a, 136n indique une position ouverte d'au moins un des disjoncteurs 136a, 136n.

En fonctionnement de la turbomachine, lorsque l'ouverture d'un disjoncteur 136a 136n est détectée, la consigne de puissance électrique de la turbomachine calculée par anticipation est réduite de façon immédiate.

La réduction de la consigne de puissance électrique, pour toutes les génératrices 134a, 134n, peut être calculée selon la formule :

[Math 3]

$$P = \frac{P_{ant}}{N}$$

avec P la consigne de puissance électrique de la turbomachine, $P_{ant}$ la puissance d'anticipation des génératrices 134a, 134n et du système électrique propulsif 138 avant réception de l'information sur la position des disjoncteurs 136a, 136n indiquant une position ouverte d'au moins un des disjoncteurs 136a, 136n et N le nombre de génératrices électriques de l'installation propulsive hybride initialement en fonctionnement. $P_{ant}$ est ainsi la puissance d'anticipation de toute la chaîne propulsive alimentée par la turbomachine avant prise en compte de la perte d'une génératrice 134a, 134n.

Selon cette formule, l'anticipation est calculée de manière globale, c'est-à-dire qu'il est considéré que chaque génératrice 134a, 134n fournit la même contribution.

La réduction de la consigne de puissance électrique, pour chaque génératrice 134a, 134n, peut être calculée selon la formule :

[Math 4]

$$P = P\_gen_i$$

avec P la consigne de puissance électrique de la turbomachine, $P\_gen_i$ la puissance d'anticipation de la génératrice i et d'au moins une partie du système électrique propulsif 138 entraînée par la génératrice i, i étant compris entre 1 et N, N étant le nombre de génératrices électriques de l'installation 100. $P\_gen_i$ est ainsi la puissance d'anticipation spécifique à la puissance de propulsion électrique alimentée par la génératrice i.

Selon cette formule, l'anticipation est calculée de manière séparée pour chaque génératrice 134a, 134n.

**Revendications**

1. Installation (100) propulsive hybride pour un aéronef, comprenant :

   - un moteur à combustion interne comportant au moins une chambre de combustion (114) ;
   - au moins une génératrice électrique (134a, 134n) accouplée au moteur à combustion interne de sorte qu'en fonctionnement le moteur à combustion interne entraîne la ou chaque génératrice électrique (134a, 134n) ;
   - un système électrique propulsif (138) accouplé à la ou chaque génératrice électrique (134a, 134n) de sorte qu'en fonctionnement la ou chaque génératrice électrique (134a, 134n) entraîne le système électrique propulsif (138) ;
   - des moyens électromécaniques de protection (136a, 136n) agencés entre la ou chaque génératrice électrique (134a, 134n) et le système électrique propulsif (138), chaque moyen électromécanique de protection (136a, 136n) pouvant être dans une position dite fermée dans laquelle un courant électrique est transmis de la génératrice électrique (134a, 134n) au système électrique (138) propulsif ou dans une position dite ouverte dans laquelle la transmission du courant électrique de la génératrice électrique (134a, 134n) au système électrique propulsif (138) est interrompue ;
   - un calculateur électronique (132) configuré pour :

     - recevoir au moins une information sur la position des moyens électromécaniques de protection (136a, 136n) ;
     - recevoir au moins une information sur une vitesse de rotation d'un arbre (124) du moteur à combustion interne ; et

   l'installation étant **caractérisée en ce que** le calculateur électronique (132) est configuré pour contrôler le débit de carburant alimentant la chambre de combustion (114) en fonction desdites informations reçues.

2. Installation (100) propulsive hybride selon la revendication précédente, dans laquelle chaque moyen électromécanique de protection (136a, 136n) comporte au moins un contact auxiliaire (156a, 156n) de recopie de la position des pôles de coupure principaux dudit moyen électromécanique de protection (136a, 136n), et dans laquelle le calculateur électronique (132) est configuré pour recevoir au moins une information sur la position du ou desdits contacts auxiliaires (156a, 156n).

**3.** Installation (100) propulsive hybride selon l'une des revendications précédentes, comprenant également un dispositif (154) configuré pour recevoir au moins une première information sur la position des moyens électromécaniques de protection (136a, 136n) et pour la transmettre au calculateur électronique (132).

**4.** Installation (100) propulsive hybride selon la revendication précédente, dans laquelle le dispositif (154) est également configuré pour générer, à partir de la première information, une seconde information sur la position des moyens électromécaniques de protection (136a, 136n) et pour transmettre ladite seconde information au calculateur électronique (132).

**5.** Installation (100) propulsive hybride selon l'une des revendications précédentes, comprenant également un électro-clapet (152) agencé entre un circuit de carburant (130) et la chambre de combustion (114), l'électro-clapet (152) pouvant être dans une position dite ouverte dans laquelle la chambre de combustion (114) est alimentée en carburant ou dans une position dite fermée dans laquelle l'alimentation en carburant de la chambre de combustion (114) est interrompue, et dans laquelle le calculateur électronique (132) est également configuré pour commander l'ouverture et la fermeture de l'électro-clapet (152).

**6.** Aéronef comprenant au moins une installation (100) propulsive hybride selon l'une des revendications précédentes.

**7.** Procédé de commande de l'installation (100) propulsive hybride de l'une des revendications 1 à 5, comprenant les étapes consistant à :

- la réception, par le calculateur électronique (132), d'au moins une information sur la position des moyens électromécaniques de protection (136a, 136n) ;
- la réception, par le calculateur électronique (132), d'au moins une information sur une vitesse de rotation d'un arbre (124) du moteur à combustion interne ; et
- le contrôle, par le calculateur électronique (132), du débit de carburant alimentant la chambre de combustion (114) en fonction desdites informations reçues.

**8.** Procédé de selon la revendication précédente, dans lequel l'étape de contrôle consiste en une réduction de la consigne de puissance électrique du moteur à combustion interne lorsque qu'une information sur la position des moyens électromécaniques de protection (136a, 136n) indique une position ouverte d'au moins un des moyens électromécaniques de protection (136a, 136n).

**9.** Procédé de selon la revendication précédente, dans lequel la réduction de la consigne de puissance électrique, pour toutes les génératrices électriques (134a, 134n), est calculée selon la formule :

[Math 5]

$$P = \frac{P_{ant}}{N}$$

avec P la consigne de puissance électrique du moteur à combustion interne, $P_{ant}$ la puissance d'anticipation des génératrices électriques (134a, 134n) et du système électrique propulsif (138) avant réception de l'information sur la position des moyens électromécaniques de protection (136a, 136n) indiquant une position ouverte d'au moins un des moyens électromécaniques de protection (136a, 136n), et N le nombre de génératrices électriques (134a, 146n) de l'installation (100) propulsive hybride.

**10.** Procédé de selon la revendication 8, dans lequel la réduction de la consigne de puissance électrique, pour chaque génératrice électrique (136a, 136n), est calculée selon la formule :

[Math 6]

$$P = P\_gen_i$$

avec P la consigne de puissance électrique du moteur à combustion interne, $P\_gen_i$ la puissance d'anticipation de la génératrice électrique i (136a, 136n) et d'au moins une partie du système électrique propulsif (138) entraînée par la génératrice électrique i (136a, 136n), i étant compris entre 1 et N, N étant le nombre de génératrices électriques (136a, 136n) de l'installation (100) propulsive hybride.

**Patentansprüche**

1. Hybride Antriebsanlage (100) für ein Flugzeug, umfassend:

   - einen Verbrennungsmotor, der mindestens eine Brennkammer (114) umfasst;
   - mindestens einen elektrischen Generator (134a, 134n), der so mit dem Verbrennungsmotor gekoppelt ist, dass der Verbrennungsmotor im Betrieb den oder jeden elektrischen Generator (134a, 134n) antreibt;
   - ein elektrisches Antriebssystem (138), das so mit dem oder jedem elektrischen Generator (134a, 134n) gekoppelt ist, dass der oder jeder elektrische Generator (134a, 134n) im Betrieb das elektrische Antriebssystem (138) antreibt;
   - elektromechanische Schutzmittel (136a, 136n), die zwischen dem oder jedem elektrischen Generator (134a, 134n) und dem elektrischen Antriebssystem (138) angeordnet sind, wobei sich jedes elektromechanische Schutzmittel (136a, 136n) in einer sogenannten geschlossenen Stellung befinden kann, in der ein elektrischer Strom vom elektrischen Generator (134a, 134n) zum elektrischen Antriebssystem (138) übertragen wird, oder in einer sogenannten offenen Stellung, in der die Übertragung des elektrischen Stroms vom elektrischen Generator (134a, 134n) zum elektrischen Antriebssystem (138) unterbrochen ist;
   - einen elektronischen Rechner (132), der dafür konfiguriert ist:

       - mindestens eine Information über die Stellung der elektromechanischen Schutzmittel (136a, 136n) zu empfangen;
       - mindestens eine Information über eine Drehzahl einer Welle (124) des Verbrennungsmotors zu empfangen; und

   wobei die Anlage **dadurch gekennzeichnet ist, dass** der elektronische Rechner (132) dafür konfiguriert ist, den Kraftstoffdurchsatz, mit dem die Brennkammer (114) gespeist wird, in Abhängigkeit von den empfangenen Informationen zu steuern.

2. Hybride Antriebsanlage (100) nach dem vorstehenden Anspruch, wobei jedes elektromechanische Schutzmittel (136a, 136n) mindestens einen Hilfskontakt (156a, 156n) zum Kopieren der Stellung der Hauptschaltpole des elektromechanischen Schutzmittels (136a, 136n) umfasst, und wobei der elektronische Rechner (132) dafür konfiguriert ist, mindestens eine Information über die Stellung des oder der Hilfskontakte (156a, 156n) zu empfangen.

3. Hybride Antriebsanlage (100) nach einem der vorstehenden Ansprüche, die ebenfalls eine Vorrichtung (154) umfasst, welche dafür konfiguriert ist, mindestens eine erste Information über die Stellung der elektromechanischen Schutzmittel (136a, 136n) zu empfangen und diese an den elektronischen Rechner (132) zu übertragen.

4. Hybride Antriebsanlage (100) nach dem vorstehenden Anspruch, wobei die Vorrichtung (154) ebenfalls dafür konfiguriert ist, auf Grundlage der ersten Information eine zweite Information über die Stellung der elektromechanischen Schutzmittel (136a, 136n) zu erzeugen und die zweite Information an den elektronischen Rechner (132) zu übertragen.

5. Hybride Antriebsanlage (100) nach einem der vorstehenden Ansprüche, die ebenfalls ein Elektroventil (152) umfasst, das zwischen einem Kraftstoffkreis (130) und der Brennkammer (114) angeordnet ist, wobei sich das Elektroventil (152) in einer sogenannten offenen Stellung befinden kann, in der die Brennkammer (114) mit Kraftstoff gespeist wird, oder in einer sogenannten geschlossenen Stellung, in der die Speisung der Brennkammer (114) mit Kraftstoff unterbrochen ist, und wobei der elektronische Rechner (132) ebenfalls dafür konfiguriert ist, das Öffnen und das Schließen des Elektroventils (152) zu steuern.

6. Flugzeug, das mindestens eine hybride Antriebsanlage (100) nach einem der vorstehenden Ansprüche umfasst.

7. Verfahren zum Steuern der hybriden Antriebsanlage (100) nach einem der Ansprüche 1 bis 5, das die Schritte umfasst, die in Folgendem bestehen:

   - Empfangen mindestens einer Information über die Stellung der elektromechanischen Schutzmittel (136a, 136n) durch den elektronischen Rechner (132);
   - Empfangen mindestens einer Information über eine Drehzahl einer Welle (124) des Verbrennungsmotors durch den elektronischen Rechner (132); und
   - Steuern des Kraftstoffdurchsatzes, mit dem die Brennkammer (114) gespeist wird, durch den elektronischen

Rechner (132) in Abhängigkeit von den empfangenen Informationen.

**8.** Verfahren zum nach dem vorstehenden Anspruch, wobei der Schritt des Steuerns in einem Reduzieren des Sollwerts der elektrischen Leistung des Verbrennungsmotors besteht, wenn eine Information über die Stellung der elektromechanischen Schutzmittel (136a, 136n) eine offene Stellung mindestens eines der elektromechanischen Schutzmittel (136a, 136n) anzeigt.

**9.** Verfahren zum nach dem vorstehenden Anspruch, wobei das Reduzieren des Sollwerts der elektrischen Leistung für alle elektrischen Generatoren (134a, 134n) nach der folgenden Formel berechnet wird:

[Formel 5]

$$P = \frac{P_{ant}}{N}$$

wobei P der Sollwert der elektrischen Leistung des Verbrennungsmotors ist, $P_{ant}$ die Antizipationsleistung der elektrischen Generatoren (134a, 134n) und des elektrischen Antriebssystems (138) vor Empfang der Information über die Stellung der elektromechanischen Schutzmittel (136a, 136n), die eine offene Stellung mindestens eines der elektromechanischen Schutzmittel (136a, 136n) anzeigt, ist, und N die Anzahl der elektrischen Generatoren (134a, 146n) der hybriden Antriebsanlage (100) ist.

**10.** Verfahren zum nach Anspruch 8, wobei das Reduzieren des Sollwerts der elektrischen Leistung für jeden elektrischen Generator (136a, 136n) nach der folgenden Formel berechnet wird:

[Formel 6]

$$P = P_gen_i$$

wobei P der Sollwert der elektrischen Leistung des Verbrennungsmotors ist, $P_gen_i$ die Antizipationsleistung des elektrischen Generators i (136a, 136n) und mindestens eines von dem elektrischen Generator i (136a, 136n) angetriebenen Teils des elektrischen Antriebssystems (138) ist, wobei i zwischen 1 und N liegt, wobei N die Anzahl der elektrischen Generatoren (136a, 136n) der hybriden Antriebsanlage (100) ist.

## Claims

**1.** A hybrid propulsion installation (100) for an aircraft, comprising:

- an internal combustion engine comprising at least one combustion chamber (114);
- at least one electricity generator (134a, 134n) coupled to the internal combustion engine such that in operation the internal combustion engine drives said or each electricity generator (134a, 134n);
- an electrical propulsion system (138) coupled to said or each electricity generator (134a, 134n) such that in operation said or each electricity generator (134a, 134n) drives the electrical propulsion system (138);
- electromechanical protection means (136a, 136n) arranged between said or each electricity generator (134a, 134n) and the electrical propulsion system (138), each electromechanical protection means (136a, 136n) being capable of being in a so-called closed position in which an electrical current is transmitted from the electricity generator (134a, 134n) to the propulsive electrical system (138) or in a so-called open position in which the transmission of the electrical current from the electricity generator (134a, 134n) to the electrical propulsion system (138) is interrupted;
- an electronic computer (132) configured to:
    - receive at least one piece of information about the position of the electromechanical protection means (136a, 136n); and,
    - receive at least one piece of information about a speed of rotation of a shaft (124) of the internal combustion engine,

said hybrid propulsion installation (100) being **characterised in that** the electronic computer (132) is configured to :

- control the flow of fuel supplying the combustion chamber (114) based on said received pieces of information.

2. The hybrid propulsion installation (100) according to the preceding claim, wherein each electromechanical protection means (136a, 136n) comprises at least one auxiliary contact (156a, 156n) for copying the position of the main cut-off poles of said electromechanical protection means (136a, 136n), and wherein the electronic computer (132) is configured to receive at least one piece of information on the position of said auxiliary contact(s) (156a, 156n).

3. The hybrid propulsion installation (100) according to one of the preceding claims, also comprising a device (154) configured to receive at least a first piece of information on the position of the electromechanical protection means (136a, 136n) and to transmit it to the electronic computer (132).

4. The hybrid propulsion installation (100) according to the preceding claim, wherein the device (154) is also configured to generate, from the first piece of information, a second piece of information on the position of the electromechanical protection means (136a, 136n) and to transmit said second piece of information to the electronic computer (132).

5. The hybrid propulsion installation (100) according to one of the preceding claims, also comprising a solenoid valve (152) arranged between a fuel circuit (130) and the combustion chamber (114), the solenoid valve (152) being able to be in a so-called open position in which the combustion chamber (114) is supplied with fuel or in a so-called closed position in which the supply of fuel to the combustion chamber (114) is interrupted, and wherein the electronic computer (132) is also configured to control the opening and closing of the solenoid valve (152).

6. An aircraft comprising at least one hybrid propulsion installation (100) according to one of the preceding claims.

7. A method for controlling the hybrid propulsion installation (100) of one of the claims 1 to 5, comprising the steps consisting of:

- receiving, by the electronic computer (132), at least one piece of information on the position of the electromechanical protection means (136a, 136n);
- receiving, by the electronic computer (132), at least one piece of information on a speed of rotation of a shaft (124) of the internal combustion engine; and
- controlling, by the electronic computer (132), the flow of fuel supplying to the combustion chamber (114) according to said received pieces of information.

8. A method of according to the preceding claim, wherein the control step consists in reducing the electric power setpoint of the internal combustion engine when a piece of information on the position of the electromechanical protection means (136a, 136n) indicates an open position of at least one of the electromechanical protection means (136a, 136n).

9. The method of according to the preceding claim, wherein the reduction of the electrical power setpoint, for all the electrical generators (134a, 134n), is calculated according to the formula:

[Math 5]

$$P = \frac{P_{ant}}{N}$$

where P is the electrical power setpoint of the internal combustion engine, $P_{ant}$ is the anticipatory power of the electrical generators (134a, 134n) and of the electrical propulsion system (138) before receiving the piece of information on the position of the electromechanical protection means (136a, 136n) indicating an open position of at least one of the electromechanical protection means (136a, 136n), and N is the number of electrical generators (134a, 146n) of the hybrid propulsion installation (100).

10. The method of according to claim 8, wherein the reduction of the electrical power setpoint, for each electricity generator (136a, 136n), is calculated according to the formula:

[Math 6]

$$P = P\_gen_i$$

where P is the electrical power setpoint of the internal combustion engine, P_gen; is the anticipatory power of the electricity generator i (136a, 136n) and of at least one part of the electrical propulsion system (138) driven by the electricity generator i (136a, 136n), where i is between 1 and N, where N is the number of electrical generators (136a, 136n) of the hybrid propulsion installation (100).

EP 3 953 206 B1

**Fig. 1**

**Fig.2**

15

**Fig.3**

**Fig.4**

EP 3 953 206 B1

**Fig.5**

**Fig.6**

17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3222510 A